# EUROPÄISCHE PATENTANMELDUNG

(11) **EP 4 332 703 A1**
(43) Veröffentlichungstag der Anmeldung: **06.03.2024**
(21) Anmeldenummer: 22192875.7
(22) Anmeldetag: 30.08.2022
(51) Int. Cl.: G05B 19/418, G06F 30/17

(54) **VERFAHREN ZUM SIMULIEREN EINES BAUTEILS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Boschert, Stefan, 85579 Neubiberg (DE); Ellath Meethal, Rishith, 80937 München (DE)
(74) Vertreter: Siemens Patent Attorneys

(57) **Zusammenfassung**

Die Erfindung betrifft ein Verfahren zum Simulieren eines Bauteils (12) mittels einer elektronischen Recheneinrichtung (10), mit den Schritten:
- Bereitstellen eines digitalen Modells (16) des zu simulierenden Bauteils (12);
- Bestimmen von zumindest einer sich wiederholenden geometrischen Form (18) des Bauteils (12) innerhalb des digitalen Modells (16);
- Erzeugen eines Ersatzmodells (14) für die zumindest eine geometrische Form (18); und
- Simulieren des Bauteils (12) durch Auswerten von zumindest einem Simulationsparameter (20), wobei der Simulationsparameter (20) auf das Ersatzmodell (14) angewendet wird. Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Simulieren eines Bauteils mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Simulationen, beispielsweise von Bauteilen, sind in den letzten Jahrzehnten ein wesentlicher Bestandteil der Entwurf- und Entwicklungsphase eines Produkts geworden. Sie sind auch in der Betriebsphase in Form des digitalen Zwillings von entscheidender Bedeutung. Je nach Anforderung kann die Anzahl der durchgeführten Simulationen beträchtlich sein. Die Zeit für Simulationen ist ein wesentlicher Teil des Entwurfs und der Entwicklung. Insbesondere Echtzeitsimulationen sind dabei von entscheidender Bedeutung. Es gibt hierbei viele Versuche, mithilfe von Surrogatmodellen die Simulationen zu beschleunigen, um das Ziel der Echtzeitsimulation zu erreichen.

Aus dem Stand der Technik sind hierzu bekannt, dass beispielsweise Symmetrie- oder Assymetrierandbedingungen für die Simulation genutzt werden können beziehungsweise die Konstruktion von repräsentativen Volumenelementen (RVEs) und Homogenisierung in Verbundwerkstoffen genutzt werden.

Aufgabe der vorliegenden Erfindung ist es ein Verfahren, ein Computerprogrammprodukt, ein computerlesbares Speichermedium sowie eine elektronische Recheneinrichtung zu schaffen, mittels welchen recheneffizient eine Simulation eines Bauteils durchgeführt werden kann.

Diese Aufgabe wird durch ein Verfahren, ein Computerprogrammprodukt sowie durch ein computerlesbares Speichermedium einer elektronischen Recheneinrichtung gemäß den unabhängingen Patentansprüchen gelöst. Vorteilhafte Ausgestaltungsformen sind in den Unteransprüchen angegeben.

Ein Aspekt der Erfindung betrifft ein Verfahren zum Simulieren eines Bauteils mittels einer elektronischen Recheneinrichtung. Es erfolgt das Bereitstellen eines digitalen Modells des zu simulierenden Bauteils. Es folgt das Bestimmen von zumindest einer sich wiederholenden geometrischen Form des Bauteils innerhalb des digitalen Modells. Es wird ein Ersatzmodell, insbesondere ein sogenanntes Surrogatmodell, für die zumindest eine geometrische Form erzeugt. Das Bauteil wird durch Auswerten von zumindest einem Simulationsparameter simuliert, wobei der Simulationsparameter auf das Ersatzmodell angewendet wird.

In der vorliegenden Erfindung wird somit eine Unterkategorie von Simulationen mit sich wiederholenden geometrischen Formen beziehungsweise Einheiten gewählt. In der Praxis treffen die Simulationsingenieure auf entsprechende Teilgeometrien, die sich im gesamten Simulationsaufbau wiederholen, aber keine Symmetriebedingungen besitzen. Ein Beispiel für eine solche Kategorie kann eine thermische Simulation eines Stabes sein, der oben eine Konvektion und unten eine Wärmequelle ausgesetzt ist. Das Ziel der Simulation ist die Bestimmung der Temperaturverteilung entlang des Stabs. Für die linke und rechte Seite gelten ähnliche Randbedingungen. Für die Einheiten dazwischen jedoch unterschiedliche. Die Einheiten dabei können ähnlich sein und unterscheiden sich jedoch in entsprechenden Randbedingungen.

Insbesondere besteht somit die Grundidee der Erfindung darin, das Gesamtproblem der Simulation zu vereinfachen, indem es in zwei Schritte aufgeteilt wird. Zunächst wird ein Modell für die sich wiederholende geometrische Struktur beziehungsweise Form erstellt und für alle relevanten Randbedingungen gelöst.

Die Lösungen werden in ein Surrogatmodel beziehungsweise Ersatzmodell gepackt, das sich leicht auswerten lässt. Im zweiten Schritt wird das Ersatzmodell zur Lösung des Gesamtproblems verwendet.

Insbesondere zeichnet sich somit die Erfindung aus, dass sich die wiederholenden geometrischen Einheiten einer komplexen Simulation durch physikalische Surrogate ersetzen lassen. Diese Surrogate sind beispielsweise auf Maschinenlernbasis ersetzt. Keine der bestehenden Methoden im Stand der Technik ersetzt solche Einheiten durch Ersatzmodelle, die auf physikalisch informierten Maschinenlernende (ML)-Methoden basieren. Erfindungsgemäß wird die sich wiederholende Form nur einmal gelöst, indem die Geometrie, die Randbedingungen und die Quellterme parametrisiert und mit physikalischen ML-Surrogaten gelöst werden. Dies trägt zu einer schnelleren Simulation bei, die sowohl in der Entwurf- als auch in der Betriebsphase wichtig ist.

Gemäß einer vorteilhaften Ausgestaltungsform wird mittels eines maschinellen Lernalgorithmus für die sich wiederholende Form eine Randbedingung bestimmt. Insbesondere können beim Bestimmen der sich wiederholenden geometrischen Formen Randbedingungen und/oder Quelle und/oder weitere Parameter genutzt werden. Es wird auch die primäre Verteilung der Variablen, die an der Grenze und der Oberfläche simuliert werden, bestimmt. Es erfolgt dann das Codieren der Randbedingungen oder der Quelle in einem niedrigen dimensionalen Raum, um die Anzahl der Parameter für das Ersatzmodell zu reduzieren. Dabei können beispielsweise zwei Methoden vorgeschlagen werden.

In einer vorteilhaften Ausgestaltungsform ist vorgesehen, dass als maschineller Lernalgorithmus ein neuronales Netzwerk bereitgestellt wird. Insbesondere kann mittels eines Autoencoders als neuronales Netzwerk das Ersatzmodell erzeugt werden. Ein Autoencoder ist dabei ein spezielles neuronales Netzwerk, bei denen die Eingabe die gleiche ist, wie die Ausgabe. Autoencoder können verwendet werden, um die Randbedingungen und die Quelle aus dem ursprünglichen hochdimensionalen Raum in einen niedrigdimensionalen Raum zu übertragen. Während des Trainings wird das zu kodierende Feld durch den Kodierer übertragen und dann wieder in das eigentliche Feld zurückcodiert. Auf diese Weise kann sichergestellt werden, dass während des Kodierungsprozesses keine Daten verloren gehen. Der Kodierer wird beim vorgeschlagenen Verfahren eigenständig verwendet. Der Autoencoder wird nur für den Kodierungsprozess (Training des NN, zur Validierung (sicherstellen kein Datenverlust)) eingesetzt wird.

In einer alternativen Ausführungsform kann mittels eines rechnergestützten Konstruktionsalgorithmus für die sich wiederholende Form eine Randbedingung bestimmt werden. Bei diesen rechnergestützten Konstruktionsalgorithmen kann es sich beispielsweise um sogenannte NURBS, B-splines oder der gleichen handeln. Methoden wie NURSBS und B-splines können verwendet werden, um Grenzen oder Oberflächen und die darauf befindlichen Daten darzustellen. Dadurch verringert sich die Anzahl der für die Darstellung erforderlichen Parameter erheblich.

Weiterhin kann vorgesehen sein, dass das Ersatzmodell mittels eines physikalisch informierten neuronalen Netzwerks erzeugt wird. Bei dem physikalisch informierten neuronalen Netzwerk handelt es sich insbesondere um ein sogenanntes PINN (physical inform neural network). Insbesondere erfolgt das Trainieren des Ersatzmodells somit für die sich wiederholende geometrische Form mithilfe des physikalisch informierten Maschinenlernalgorithmus. Zusammen mit den Randbedingungen und den Quelltermen können auch die geometrischen Parameter, wie beispielsweise Länge, Breite, Radius der geometrischen Einheit als Eingabe für das Ersatzmodell angegeben werden. Ein PINN hat also Raumkoordinaten, Zeitkoordinaten, Randbedingungen, Quellterme und geometrische Parameter als Input um eine Primärvariable, zum Beispiel die Temperatur, als Output zu erzeugen und zu simulieren.

Insbesondere wird es somit das Ersatzmodell auf Basis zumindest einer geometrischen Eigenschaft, der sich wiederholenden geometrischen Form erzeugt. Dabei kann beispielsweise eine Länge der geometrischen Form und/oder eine Tiefe der geometrischen Form und/oder eine Breite der geometrischen Form und/oder ein Radius der geometrischen Form als die geometrische Eigenschaft berücksichtigt werden. Es können auch weitere geometrische Eigenschaften beziehungsweise geometrische Parameter, wie zum Beispiel die Position/Radius einer Bohrung, berücksichtigt werden. Die Aufzählung ist rein beispielhaft und keinesfalls abschließend.

Eine weitere vorteilhafte Ausgestaltungsform sieht vor, dass mittels eines Gebietszerlegungsverfahrens die Simulation des Bauteils mit dem Ersatzmodell durchgeführt wird. Beispielsweise kann dabei mittels eines monolithischen Gebietszerlegungsverfahrens die Simulation des Bauteils durchgeführt werden oder alternativ mit einem unterteilten Gebietszerlegungsverfahren. Insbesondere können somit die vortrainierten Ersatzmodelle durch sich wiederholende Einheiten für die Durchführung der gesamten Simulation verwendet werden, indem die Methode der Gebietszerlegung (domain decomposition method - DDM) verwendet wird. Das Gebietszerlegungsverfahren kann je nach Komplexität des Problems entweder partitioniert oder monolithisch sein.

Ferner hat es sich als vorteilhaft erwiesen, wenn eine geometrische Eigenschaft der geometrischen Form in Abhängigkeit von einer Eingabe angepasst wird und ein weiteres Ersatzmodell auf Basis der angepassten geometrischen Eigenschaft bestimmt wird. Somit können beispielsweise Maschinen, welche im Wesentlichen gleich aufgebaut sind, aber beispielsweise in ihrer geometrischen Form größer sind, ebenfalls simuliert werden, indem die geometrische Eigenschaft, beispielsweise eine Ausdehnung der geometrischen Form, verändert wird und im Ersatzmodell nachsimuliert wird. Somit ist es möglich, dass auf einfache Art und Weise die Simulation von unterschiedlichen Maschinen durchgeführt werden kann.

Eine weitere Möglichkeit die sich wiederholende Struktur zu erzeugen/parametrisieren ist eine Änderung des Materials, das sich in geänderten Materialeigenschaften des Bauteils manifestiert.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt wird auch als Computerprogramm bezeichnet.

Ein weiterer Aspekt der Erfindung betrifft daher auch ein computerlesbares Speichermedium mit dem zumindest einen Computerprogrammprodukt nach dem vorhergehenden Aspekt.

Ferner betrifft die Erfindung auch eine elektronische Recheneinrichtung zum Simulieren eines Bauteils, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können.

Vorteile Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist insbesondere Bauteile auf, um entsprechende Verfahrensschritte durchführen zu können.

Für Anwendungsfälle oder Anwendungssituationen, die sich bei dem Verfahren ergeben können und die hier nicht explizit oder spezifisch beschrieben sind, kann vorgesehen sein, dass gemäß dem Verfahren eine Fehlermeldung und/oder eine Aufforderung zur Eingabe eine Nutzerrückmeldung ausgegeben und/oder eine Standardeinstellung und/oder ein vorbestimmter Initialzustand eingestellt wird.

In den nachfolgenden Ausführungsbeispielen wird die Erfindung anhand der Zeichnungen näher beschrieben. Dabei zeigen:
- FIG 1: ein schematisches Ablaufdiagramm zum Erzeugen eines Ersatzmodells; und
- FIG 2: ein weiteres schematisches Ablaufdiagramm zum Durchführen einer Simulation.

In den Figuren sind gleiche oder funktionsgleiche Elemente mit den gleichen Bezugszeichen versehen.

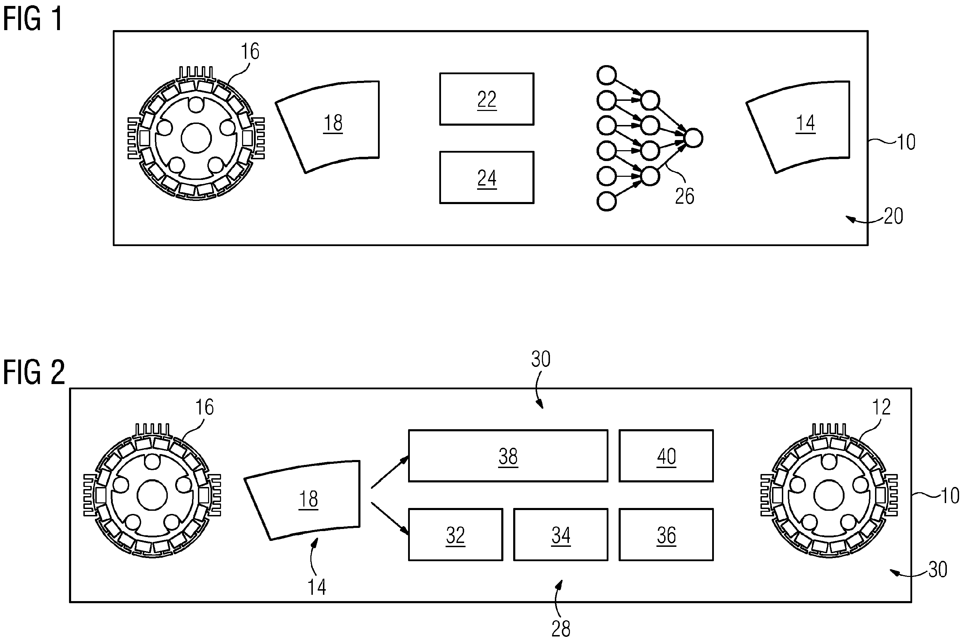

Fig 1 zeigt ein schematisches Beispiel einer Ausführungsform einer elektronischen Recheneinrichtung 10 zum Simulieren eines Bauteils 12 (Fig. 2). Insbesondere ist das Anlernen eines Ersatzmodells 14 gezeigt. Beim vorgestellten Verfahren ist insbesondere vorgesehen, dass ein digitales Modell 16 des zu simulierenden Bauteils 12 bereitgestellt wird. Im vorliegenden Ausführungsbeispiel kann dies beispielsweise als Elektromotor angesehen werden. Es erfolgt das Bestimmen von zumindest einer sich wiederholten geometrischen Form 18 des Bauteils 12 innerhalb des digitalen Modells 16. Das Ersatzmodell 14 für die zumindest eine geometrische Form 12 wird erzeugt und es folgt das Simulieren des Bauteils 12 durch Auswerten von zumindest einem Simulationsparameter 20, wobei der Simulationsparameter 20 auf das Ersatzmodell 14 angewendet wird.

Im folgenden Ausführungsbeispiel ist insbesondere gezeigt, dass mittels eines maschinellen Lernalgorithmus 22 für die sich wiederholende Form 18 eine Randbedingung bestimmt wird. Als maschineller Lernalgorithmus 22 kann insbesondere ein neuronales Netzwerk bereitgestellt werden, insbesondere ein sogenannter Autoencoder bereitgestellt werden. Alternativ kann das Ersatzmodell 14 mittels eines rechnergestützten Konstruktionsalgorithmus 24 für die sich wiederholende Form 18 eine Randbedindung bestimmt werden.

Die Fig. 1 zeigt ferner, dass das Ersatzmodell 14 mittels eines physikalisch informierten neuronalen Netzwerks 26 erzeugt wird.

Insbesondere zeigt somit die Fig. 1, dass Ersatzmodelle 14 für die sich wiederholende geometrischen Formen 18 durch Parametrisierung der möglichen unterschiedlichen Faktoren in der sich wiederholenden Form 18 erstellt werden. Dabei kann es sich um Quellterme, Randbedingungen oder einen anderen relevanten Parameter handeln. Einfache Ersatzmodelle 14 sind dabei nicht geeignet, da die Anzahl der Parameter hoch genug ist. Aufgrund der hohen Dimensionalität des Problems sind herkömmliche Surrogatmodelle, insbesondere sogenannte look-up tables, hier nicht geeignet, da die Anzahl der Parameter hoch ist. Aufgrund der hohen Dimensionalität des Problems sind somit herkömmliche Surrogatmodelle gemäß dem Stand der Technik nicht ideal für dieses Problem. Sogenannte informierte Maschinenlern-Methoden, wie beispielsweise PINN, welche vorliegend insbesondere durch das physikalisch informierte neuronale Netzwerk 26 dargestellt sind, können zur Erstellung physikkonformer Surrogate verwendet werden. Da die Randbedingungen oder Quellterme, welche vorliegend dem Simulationsparameter 26 entsprechen, über den gesamten Problembereich verteilt sind, entweder an den Grenzen oder auf der Oberfläche beziehungsweise Volumen, kann die Parametrisierung schwierig sein. Die Parametrisierung kann mit konventionellen Methoden, wie beispielsweise NURBS oder auf neuronale Netzwerke basierende Methoden, wie Autoencodern, erfolgen.

Das Verfahren zur Erstellung des Ersatzmodells 14 ist, wie bereits erwähnt, in der Fig. 1 dargestellt. Bevorzugt ist dabei vorgesehen, dass der maschinelle Lernalgorithmus 22 als Autoencoder genutzt wird. Autoencoder sind dabei spezielle neuronale Netze, bei denen die Eingabe die gleiche ist wie die Ausgabe. Autoencoder können verwendet werden, um die Randbedingungen und die Quelle aus dem ursprünglichen hochdimensionalen Raum in einen niedrigdimensionalen Raum zu übertragen. Während des Trainings wird das zu kodierende Feld durch den Kodierer übertragen und dann wieder in das eigentliche Feld zurückkodiert. Auf diese Weise kann sichergestellt werden, dass während des Kodierungsprozesses keine Daten verloren gehen. Der Kodierer wird beim vorgeschlagenen Verfahren eigenständig verwendet. Der Autoencoder wird nur für den Kodierungsprozess (Training des NN, zur Validierung (sicherstellen kein Datenverlust)) eingesetzt wird.

Es erfolgt dann das Trainieren des Ersatzmodells 14 für die sich wiederholende geometrische Form 18 unter Verwendung des PINN. Zusammen mit den Randbedingungen und Quelltermen können auch die geometrischen Parameter, wie zum Beispiel Länge, Breite, Radius der geometrischen Form 18 oder der gleichen als Eingabe für das Ersatzmodell 14 angegeben werden. Das PINN-Modell hat also Raumkoordinaten, Zeitkoordinaten, Randbedingungen, Quelltermen und geometrische Parameter als Eingabe und eine Primärvariable, zum Beispiel eine Temperatur als Ausgabe. Wenn zum Beispiel Länge, Breite und Krümmung der sich wiederholenden Form 18 parametrisiert wird, kann das generierte Ersatzmodell 14 auch für unterschiedliche Größen von Motoren und Geometrieoptimierungsproblemen verwendet werden. Somit ist es ermöglicht, dass eine geometrische Eigenschaft der geometrischen Form 18 in Abhängigkeit von einer Eingabe, beispielsweise durch einen Nutzer, angepasst wird und ein weiteres Ersatzmodell, beispielsweise ein größeres Ersatzmodell, auf Basis der angepassten geometrischen Eigenschaft bestimmt wird.

Fig. 2 zeigt eine weitere schematische Ansicht gemäß einer Ausführungsform des Verfahrens, wobei insbesondere auf Basis des Ersatzmodells 14 nun eine Simulation des Bauteils 12 durchgeführt werden kann. Insbesondere kann hierbei vorgesehen sein, dass mittels eines Gebietszerlegungsverfahrens 28, 30 die Simulation des Bauteils 12 mit dem Ersatzmodell 14 durchgeführt wird. Vorliegend ist insbesondere ein unterteiltes Gebietszerlegungsverfahren 28 gezeigt, wobei dies auch als partial domain decomposition method bekannt ist. Hierzu erfolgt beispielsweise in einem ersten Schritt 32 das Dekodieren einer Randbedingung mittels des trainierten Encoders. Es erfolgt dann im weiteren Schritt 34 die Vorhersage der Lösung innerhalb der geometrischen Form 18 durch das Nutzen des physikalisch informierten neuronalen Netzwerks 26. In einem weiteren Schritt 36 wird dann wiederum die Lösung zurückdekodiert und für die Gesamtsimulation verwendet.

Fig. 2 zeigt ferner, dass alternativ zum unterteilten Gebietszerlegungsverfahren 28 ein monolithisches Gebietszerlegungsverfahren 30 verwendet werden kann. Hierbei kann in einem ersten Schritt 38 beispielsweise die Konstruktion einer Steifigkeitsmatrix der geometrischen Form 18 durch automatische Differentiation erfolgen. In einem weiteren Schritt 40 erfolgt dann wiederum die Zusammenführung des Rests des Bauteils 14, um die ganzheitliche Steifigkeitsmatrix für das Bauteil 12 zu erzeugen. Jeweils nach dem unterteilten Gebietszerlegungsverfahren 28 und nach dem monolithischen Gebietszerlegungsverfahren 30 erfolgt wiederum die Gesamtsimulation des Bauteils 12.

Durch die oben beschriebenen Simulationen des Bauteils 12 kann insbesondere ein digitaler Zwilling eines real existierenden Bauteils oder eines herzustellenden Bauteils implementiert werden. Das reale oder hergestellte Bauteil kann hierbei insbesondere ein Bauteil einer Maschine sein.

So kann abhängig von einem simulierten Verhalten des Bauteils 12 ein diesem entsprechendes reales Bauteil insbesondere im laufenden Betrieb der Maschine gehandhabt, benutzt, manipuliert, behandelt, bearbeitet, gewartet und/oder angesteuert werden. Analog dazu kann ein herzustellendes Bauteil abhängig von der Simulation des Bauteils 12 hergestellt werden. Insbesondere kann eine Produktionsanlage abhängig von der Simulation des Bauteils 12 angesteuert werden, um das herzustellende Bauteil anzufertigen oder zu bearbeiten.

## Patentansprüche

1. Verfahren zum Simulieren eines Bauteils (12) mittels einer elektronischen Recheneinrichtung (10), mit den Schritten:
- Bereitstellen eines digitalen Modells (16) des zu simulierenden Bauteils (12);
- Bestimmen von zumindest einer sich wiederholenden geometrischen Form (18) des Bauteils (12) innerhalb des digitalen Modells (16);
- Erzeugen eines Ersatzmodells (14) für die zumindest eine geometrische Form (18); und
- Simulieren des Bauteils (12) durch Auswerten von zumindest einem Simulationsparameter (20), wobei der Simulationsparameter (20) auf das Ersatzmodell (14) angewendet wird.

2. Verfahren nach Anspruch 1,
**dadurch gekennzeichnet, dass**
mittels eines maschinellen Lernalgorithmus (22) für die sich wiederholende Form (18) eine Randbedingung als Simulationsparameter (20) bestimmt wird.

3. Verfahren nach Anspruch 2,
**dadurch gekennzeichnet, dass**
als maschineller Lernalgorithmus (22) ein neuronales Netzwerk bereitgestellt wird.

4. Verfahren nach Anspruch 3,
**dadurch gekennzeichnet, dass**
mittels eines Autoencoders als neuronales Netzwerk das Ersatzmodell (14) erzeugt wird.

5. Verfahren nach Anspruch 1,
**dadurch gekennzeichnet, dass**
mittels eines rechnergestützten Konstruktionsalgorithmus (24) für die sich wiederholende Form (18) eine Randbedingung als Simulationsparameter (20) bestimmt wird.

6. Verfahren nach einem der vorhergehenden Ansprüche,
**dadurch gekennzeichnet, dass**
das Ersatzmodell (14) mittels eines physikalisch informierten neuronalen Netzwerks (26) erzeugt wird.

7. Verfahren nach einem der vorhergehenden Ansprüche,
**dadurch gekennzeichnet, dass**
das Ersatzmodell (14) auf Basis zumindest einer geometrischen Eigenschaft der sich wiederholenden geometrischen Form (18) erzeugt wird.

8. Verfahren nach Anspruch 7,
**dadurch gekennzeichnet, dass**
eine Länge der geometrischen Form (18) und/oder eine Tiefe der geometrischen Form (18) und/oder eine Breite der geometrischen Form (18) und/oder ein Radius der geometrischen Form (18) als die geometrische Eigenschaft berücksichtigt wird.

9. Verfahren nach einem der vorhergehenden Ansprüche,
**dadurch gekennzeichnet, dass**
mittels eines Gebietszerlegungsverfahrens (28, 30) die Simulation des Bauteils (12) mit dem Ersatzmodell (14) durchgeführt wird.

10. Verfahre nach Anspruch 9,
**dadurch gekennzeichnet, dass**
mittels einer monolithischen Gebietszerlegungsverfahrens (30) die Simulation des Bauteils (12) mit dem Ersatzmodell (14) durchgeführt wird.

11. Verfahren nach Anspruch 9,
**dadurch gekennzeichnet, dass**
mittels einer unterteilten Gebietszerlegungsverfahrens (28) die Simulation des Bauteils (12) mit dem Ersatzmodell (14) durchgeführt wird.

12. Verfahren nach einem der vorhergehenden Ansprüche,
**dadurch gekennzeichnet, dass**
eine geometrische Eigenschaft der geometrischen Form (18) in Abhängigkeit von einer Eingabe angepasst wird und ein weiteres Ersatzmodell auf Basis der angepassten geometrischen Eigenschaft bestimmt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Simulieren eines Bauteils (12), wobei die elektronische Recheneinrichtung (10) zum Durchführen eines Verfahrens nach einem der Ansprüche 1 bis 12 ausgebildet ist.
